# DEMANDE DE BREVET EUROPEEN

(11) **EP 1 089 090 A1**
(43) Date de publication de la demande: **04.04.2001**
(21) Numéro de dépôt: 00402665.4
(22) Date de dépôt: 26.09.2000
(51) Int. Cl.: G01S 17/89

(54) **Procédé d'imagerie laser active**

(30) Priorité: 28.09.1999 FR 9912069
(71) Demandeur: THOMSON-CSF, 75008 Paris (FR)
(72) Inventeur: Breugnot, Sébastien, 94117 Arcueil Cedex (FR)
(74) Mandataire: Vigand, Régis Louis Michel

(57) **Abrégé**

L'invention concerne le domaine des procédés d'imagerie active laser et des imageurs actifs associés.

C'est un procédé d'imagerie active laser par soustraction d'images comportant successivement une étape d'émission laser éclairant une scène (2), une étape de séparation en deux signaux lumineux (S1, S2) du flux lumineux (Fr) issu de la scène (2), une étape de détection séparée des deux signaux (S1, S3) résultant en deux images (IM1, IM3) correspondantes, et une étape de soustraction des images l'une de l'autre, la séparation étant une séparation simultanée du flux lumineux (Fr) en deux signaux lumineux (S1, S2), l'étape de séparation comportant, pour l'un des signaux (S2) seulement, une opération de filtrage par réjection de l'émission laser réfléchie par la scène (2), l'étape de détection étant sensiblement simultanée pour les deux signaux (S1, S3), et la soustraction étant pondérée de manière à donner un résultat sensiblement nul en l'absence d'émission laser.

L'invention peut être appliquée dans les systèmes de détection d'optique pointée.

## Description

L'invention concerne le domaine des procédés d'imagerie laser active et des imageurs actifs associés. L'imagerie active laser consiste à éclairer une scène observée à l'aide d'une source laser et à détecter le flux lumineux rétrodiffusé par la scène. L'imagerie active laser permet la réalisation d'imageurs de haute résolution, limités par la diffraction, pouvant identifier et reconnaître efficacement les cibles des systèmes optiques ou optroniques.

Un des problèmes essentiels de l'imagerie active consiste à pouvoir s'affranchir du bruit de fond, c'est-à-dire du flux lumineux passif émis par des sources secondaires comme le soleil ou la lune et diffusé par la scène observée. Le flux lumineux passif est un flux lumineux parasite dont il convient de s'affranchir. Pour s'affranchir du flux lumineux passif, il existe principalement deux méthodes, soit ne pas détecter le flux lumineux passif, soit supprimer le flux lumineux passif une fois qu'il a été détecté. Les deux méthodes peuvent également être utilisées de manière complémentaire, une partie du flux lumineux passif n'étant pas détectée et la partie du flux lumineux passif détectée étant supprimée. Dans ce qui précède, il s'agit de s'affranchir au maximum du flux lumineux passif, car il est rare de pouvoir s'en affranchir totalement.

Selon un premier art antérieur, il est connu d'utiliser un filtre laser passe-bande étroit afin de s'affranchir du flux lumineux passif. Cette solution présente l'inconvénient de ne pas permettre de s'affranchir du flux lumineux passif dans la bande de transmission du filtre.

Selon un deuxième art antérieur, il est connu d'utiliser un détecteur fonctionnant en mode dit « tapis roulant ». Un tel type de détecteur est par exemple décrit dans la demande de brevet française n°9512718. Un tel dispositif présente l'inconvénient d'être trop complexe.

Selon un troisième art antérieur, il est connu de s'affranchir du flux lumineux passif par soustraction d'images. Deux images séquentielles dans le temps sont soustraites l'une de l'autre. L'une des images correspond à un moment pendant lequel la scène a été éclairée par une source laser tandis que l'autre correspond à un moment pendant lequel l'image n'a pas été éclairée par la source laser. Un tel procédé présente l'inconvénient d'être extrêmement sensible aux « bougés », c'est-à-dire à toute modification dans les conditions de détection entre les deux images. Cette modification peut par exemple provenir d'un changement dans la scène observée ou d'une vibration de l'imageur, pendant le temps d'intégration des images et de soustraction des images l'une par rapport à l'autre.

L'invention propose une solution consistant en un procédé d'imagerie laser active par soustraction d'images, le procédé étant insensible aux « bougés » et consistant également en l'imageur actif correspondant.

Selon l'invention, il est prévu un procédé d'imagerie active laser par soustraction d'images comportant successivement une étape d'émission laser éclairant une scène, une étape de séparation en deux signaux lumineux du flux lumineux issu de la scène, une étape de détection séparée des deux signaux résultant en deux images correspondantes, et une étape de soustraction des images l'une de l'autre, caractérisé en ce que la séparation est une séparation simultanée du flux lumineux en deux signaux lumineux, en ce que l'étape de séparation comporte, pour l'un des signaux seulement, une opération de filtrage par réjection de l'émission laser réfléchie par la scène, en ce que l'étape de détection est sensiblement simultanée pour les deux signaux, et en ce que la soustraction est pondérée de manière à donner un résultat sensiblement nul en l'absence d'émission laser.

Selon l'invention, il est encore prévu un imageur actif comportant un émetteur laser de domaine spectral d'émission étroit, éclairant une scène, un dispositif de focalisation, collectant le flux lumineux issu de la scène, des moyens optiques de séparation, en deux signaux lumineux, du flux lumineux collecté par le dispositif de focalisation, des moyens de détection des deux signaux lumineux produisant deux images de la scène, des moyens électroniques de soustraction des images l'une de l'autre, caractérisé en ce que, la séparation, en deux signaux lumineux, du flux lumineux collecté par le dispositif de focalisation est une séparation simultanée, les moyens de détection comprennent deux détecteurs photoélectriques produisant chacun une image de la scène, le dispositif de focalisation, les détecteurs photoélectriques et les moyens optiques de séparation sont disposés de manière à ce que chaque signal lumineux soit focalisé sur un détecteur photoélectrique différent, les moyens électroniques de soustraction des images l'une de l'autre, réalisent une opération de soustraction pondérée par des coefficients déterminés de manière à ce qu'en l'absence d'émission laser, le résultat de l'opération de soustraction soit sensiblement nul, et en ce que l'imageur actif comporte aussi des moyens optiques de réjection de longueur d'onde dans un domaine spectral de réjection étroit incluant le domaine spectral d'émission, disposés de manière à n'affecter qu'un seul des deux signaux lumineux.

L'invention sera mieux comprise et d'autres particularités et avantages apparaîtront à l'aide de la description ci-après et des dessins joints, donnés à titre d'exemples, où :
- la figure 1 représente schématiquement un mode de réalisation préférentiel d'un imageur actif selon l'invention ;
- la figure 2 représente schématiquement un exemple de signal lumineux détecté par le détecteur 7 de la figure 1 ;
- la figure 3 représente schématiquement un exemple de signal lumineux détecté par le détecteur 8 de la figure 1.

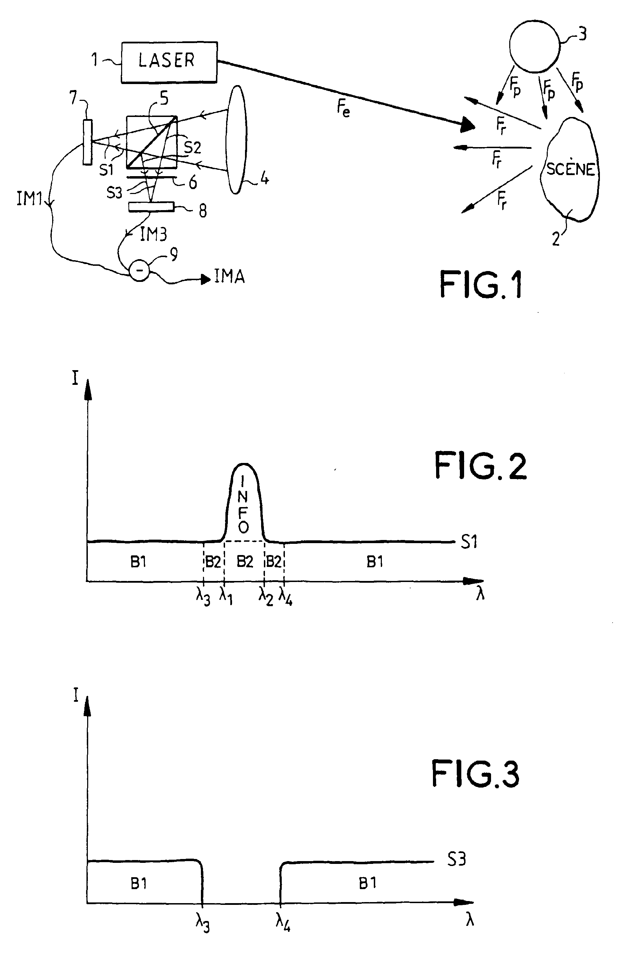

La figure 1 représente schématiquement un mode de réalisation préférentiel d'un imageur actif selon l'invention. Les flèches représentent schématiquement les trajets des différents flux lumineux. Un émetteur 1 laser de domaine spectral d'émission donné éclaire une scène 2 observée à l'aide d'un flux lumineux laser émis Fe. La scène 2 observée est également éclairée par une source 3 lumineuse parasite, comme le soleil par exemple, par l'intermédiaire d'un flux lumineux parasite Fp. La scène 2 observée rétrodiffuse, par l'intermédiaire d'un flux lumineux rétrodiffusé Fr, une partie de l'ensemble des flux lumineux Fe et Fp qui l'éclairent. Le flux lumineux issu de la scène 2, constitué du flux lumineux rétrodiffusé Fr et le cas échéant d'une partie du flux lumineux parasite Fp, est collecté par un dispositif 4 de focalisation. Les rayons fléchés indiquent le sens de propagation des signaux lumineux S1, S2, S3. Des moyens 5 optiques de séparation séparent, en deux signaux lumineux S1 et S2, le flux lumineux collecté par le dispositif 4 de focalisation. Le signal lumineux S1 est focalisé sur un premier détecteur 7. Le signal S1 contient d'une part l'information constituée par la rétroréflexion par la scène 2 du flux laser émis Fe, et d'autre part le bruit de fond constitué par le flux passif qui est, soit la rétroréflexion par la scène 2 du flux lumineux parasite Fp, soit une partie même de ce flux lumineux parasite Fp. Le signal S2 contient également de l'information et du bruit de fond dans les mêmes proportions que le signal S1, mais les intensités des signaux lumineux S1 et S2 peuvent être différentes. Le signal lumineux S2 passe par des moyens 6 optiques de réjection de longueur d'onde dans un domaine spectral de réjection donné incluant le domaine d'émission de l'émetteur 1 laser. Les moyens 6 optiques de réjection transforment le signal lumineux S2 en un signal lumineux S3 duquel ont été supprimées l'information ainsi qu'une partie du bruit de fond. Pour cela, les moyens 6 optiques sont avantageusement situés entre les moyens 5 optiques de séparation et l'un des détecteurs, ici le détecteur 8. Le signal S3 est focalisé sur le deuxième détecteur 8. Les détecteurs 7 et 8 sont de préférence des détecteurs photoélectriques. Des moyens 9 électroniques de soustraction d'images effectuent une soustraction entre les images IM1 et IM3 respectivement issues des détecteurs 7 et 8. En sortie des moyens 9 électroniques de soustraction d'images est obtenue l'image active IMA recherchée.

L'émetteur 1 laser est préférentiellement un laser mais peut également être une diode laser. Le domaine spectral d'émission est préférentiellement étroit de manière à ce que le domaine spectral de réjection des moyens 6 optiques de réjection puisse également être étroit.

Le dispositif 4 de focalisation est un dispositif collectant le flux lumineux rétroréfléchi Fr issu de la scène 2 observée. Le dispositif 4 de focalisation est par exemple une lentille simple ou bien un groupe de lentilles.

Les moyens 5 optiques de séparation séparent le signal lumineux reçu, en deux signaux lumineux S1 et S2. Les deux signaux lumineux S1 et S2 sont approximativement d'intensité égale afin que les deux images IM1 et IM3 présentent sensiblement le même niveau de bruit. Les moyens optiques 5 peuvent être par exemple un cube séparateur ou une lame séparatrice. La lame séparatrice est alors de préférence une lame 50/50, c'est-à-dire répartissant l'intensité lumineuse entre les signaux lumineux S1 et S2 à concurrence de 50% pour chaque signal. La lame séparatrice peut également être une lame séparatrice 60/40 par exemple. Une pondération adéquate des moyens 9 de soustraction d'images permet d'éliminer pratiquement tout le flux lumineux passif quelque soit le type de lame séparatrice en intégrant éventuellement l'atténuation des moyens 6 de réjection. De préférence, les moyens 5 optiques de séparation sont alors constitués par une lame séparatrice répartissant l'intensité relative des signaux lumineux S1 et S2 de manière à compenser l'atténuation des moyens 6 de réjection pour que chacun des détecteurs photoélectriques 7 et 8 reçoivent une intensité lumineuse sensiblement égale. Au lieu de séparer le flux lumineux issu du dispositif 4 de focalisation en deux parties d'intensité sensiblement égale, les moyens 5 optiques de séparation peuvent par exemple séparer ce flux lumineux en deux composantes de polarisation, horizontale et verticale.

Les moyens 6 optiques de réjection sont de préférence constitués par un filtre réjecteur de bande situé entre les moyens 5 optiques de séparation et le détecteur 8 photoélectrique. Alternativement, les moyens 5 optiques de séparation et les moyens 6 optiques de réjection peuvent avantageusement être constitués par un seul et même filtre holographique.

Soit [λ₃, λ₄] la bande spectrale de réjection du filtre 6 réjecteur. Soit [λ₁, λ₂] l'intervalle couvrant le domaine spectral d'émission de l'émetteur 1 laser. La bande spectrale de réjection [λ₃, λ₄] inclue un intervalle [λ₁, λ₂] dans lequel le domaine spectral d'émission est lui-même inclus. Les figures 2 et 3 montrent respectivement, pour un point de l'image de la scène 2 observée, les signaux S1 et S3 respectivement détectés par les détecteurs 7 et 8.

La figure 2 représente schématiquement un exemple de répartition spectrale du signal lumineux S1 détecté par le détecteur 7 tandis que la figure 3 représente schématiquement un exemple de répartition spectrale du signal lumineux S3 détecté par le détecteur 8. Les figures 2 et 3 représentent l'intensité I des signaux lumineux S1 et S3 en fonction de la longueur d'onde λ, les unités sur les axes étant arbitraires et les courbes représentées n'étant pas forcément à l'échelle. L'ensemble des zones B1, appelé plus simplement B1, représente le bruit de fond situé hors de la bande de réjection du filtre 6 réjecteur, bruit de fond qui est présent dans le signal lumineux S1 comme dans le signal lumineux S3. L'ensemble des zones B2, appelé plus simplement B2, représente le bruit de fond dans la bande de réjection du filtre 6 réjecteur, bruit de fond qui n'est présent que dans le signal S1, puisqu'il a été supprimé du signal lumineux S2 lors du passage par le filtre 6 réjecteur et que par conséquent il est absent du signal lumineux S3. De même, INFO qui représente l'information, c'est-à-dire la partie du flux lumineux émis Fe qui a été rétroréfléchie par la scène 2 observée et collectée par le dispositif 4 de focalisation, n'est présente que dans le signal lumineux S1.

Les détecteurs photoélectriques 7 et 8 sont de préférence des détecteurs matriciels composés de pixels représentant les différents points des images IM1 et IM3 de la scène 2. Les détecteurs photoélectriques 7 et 8 peuvent être des détecteurs à balayage. Les détecteurs photoélectriques 7 et 8 peuvent même être des détecteurs matriciels élémentaires à balayage afin d'obtenir un grand champ d'image de la scène 2. Les détecteurs 7 et 8 sont par exemple du type CCD (charge coupled device). Les images IM1 et IM3 obtenues à la sortie des détecteurs photoélectriques 7 et 8 représentent les différences d'albédo de la scène 2 observée. Ces images sont représentées sur la figure 1 par le signal électrique disponible à la sortie des détecteurs 7 et 8, le signal électrique se propageant dans le sens de la flèche, c'est-à-dire des détecteurs 7 et 8 vers les moyens 9 de soustraction. La soustraction entre les images IM1 et IM3 est effectuée pixel par pixel, ce qui permet d'obtenir à la sortie des moyens 9 de soustraction d'images une image active IA représentant pixel par pixel la différence entre les signaux S1 et S2. Cette soustraction est pondérée. L'opération réalisée consiste à effectuer αS1-βS3, les coefficients de pondération α et β étant déterminés de manière à ce qu'en l'absence d'émission laser, c'est-à-dire lorsque la partie INFO de la courbe S1 est inexistante, le résultat de cette opération soit nul. Les coefficients α et β vérifient donc sensiblement l'équation α(B1+B2)-βB2=0. Cet étalonnage consistant à choisir les coefficients α et β peut être effectuée soit de préférence une fois en usine lors de la fabrication de l'imageur actif, soit à chaque fois que l'utilisateur le désire à condition de prévoir un mode étalonnage dans le fonctionnement de l'imageur actif.

En présence d'émission laser, le résultat de la soustraction est alors sensiblement proportionnel à la valeur INFO représentant l'information pour le pixel considéré. On suppose réalisée la condition de « continuité de l'albédo », c'est-à-dire que l'albédo de la scène 2 varie relativement peu dans la bande de réjection des moyens 6 optiques de réjection, ce qui serait passablement vrai avec une bande de réjection très large, mais ce qui est d'autant plus vrai que la bande de réjection est étroite. C'est pourquoi, préférentiellement, le domaine spectral de réjection des moyens 6 optiques de réjection est étroit et par conséquent le domaine spectral d'émission de l'émetteur 1 laser inclus dans le domaine spectral de réjection est également étroit. La largeur de la bande de réjection peut être imposée par le rapport signal à bruit que l'on veut obtenir pour l'imageur actif. L'image active IMA, obtenue par soustraction pondérée pixel par pixel des deux images IM1 et IM3, représente, à un coefficient de proportionnalité près, l'albédo de la scène 2 dans le domaine spectral d'émission de l'émetteur 1 laser. L'image active IMA est une image de l'albédo de la scène 2 observée dans le domaine spectral d'émission de l'émetteur 1 laser. L'imageur actif a par exemple une cadence image de 50 Hz, correspondant à une image active générée toutes les 20 millisecondes.

L'émetteur 1 laser est de préférence un émetteur à émission laser continue. De cette manière, l'énergie émise est répartie dans le temps et pour une énergie globalement émise équivalente, la puissance émise par un émetteur 1 laser à émission continue est inférieure à la puissance émise dans des dispositifs utilisant de courtes impulsions laser très énergétiques. L'imageur actif selon l'invention a alors l'avantage de la discrétion.

Le domaine spectral d'émission laser est préférentiellement situé dans le visible ou dans le proche infrarouge, ce qui permet d'une part d'obtenir une résolution d'image élevée et ce qui se trouve d'autre part dans le domaine spectral de réflexion des optiques pointées.

L'invention est utilisable pour toute application d'imagerie laser. Les systèmes de détection d'optique pointée constituent cependant un domaine d'application préférentielle pour un imageur actif selon l'invention. En effet, l'image active dans ce cas consistera en aucun, un ou plusieurs points brillants sur fond noir, selon le nombre d'optiques pointées présentes dans le champ de la scène 2 observée. Ces points brillants sur fond noir présentent une facilité de détection optimale, comparée à d'autres dispositifs de l'art antérieur dans lesquels une optique pointée ne se traduit que par un point un peu plus brillant que le fond de l'image éclairé lui aussi.

Un exemple numérique préférentiel est maintenant décrit dans la suite de ce paragraphe. En reprenant les éléments de la figure 1, l'émetteur 1 laser est une diode laser continue émettant autour de 806 nanomètres (nm) avec une puissance de 5 Watts. Le dispositif 4 de focalisation est une lentille simple de diamètre valant 70 mm et de focale valant 40 cm. La lame séparatrice 5 est une lame séparatrice 50/50. Le filtre 6 réjecteur de bande a une largeur de bande spectrale valant 10nm. Les détecteurs matriciels 7 et 8 sont des matrices de 512 x 512 pixels couvrant un champ angulaire de 1 degré. La portée d'un tel imageur actif est d'environ 2km pour une SEL (surface équivalente laser) de 100m². A titre de comparaison, pour un dispositif selon le premier art antérieur, avec un filtre passe-bande autour de 806nm, la portée n'aurait été, dans les mêmes conditions par ailleurs, que de 900m. Soit un gain en portée d'un facteur supérieur à 2, sur cet exemple, en faveur de l'imageur actif selon l'invention.

## Revendications

1. Procédé d'imagerie active laser par soustraction d'images comportant successivement une étape d'émission laser éclairant une scène (2), une étape de séparation en deux signaux lumineux (S1, S2) du flux lumineux (Fr, Fp) issu de la scène (2), une étape de détection séparée des deux signaux (S1, S3) résultant en deux images (IM1, IM3) correspondantes, et une étape de soustraction des images l'une de l'autre, caractérisé en ce que la séparation est une séparation simultanée du flux lumineux (Fr, Fp) en deux signaux lumineux (S1, S2), en ce que l'étape de séparation comporte, pour l'un des signaux (S2) seulement, une opération de filtrage par réjection de l'émission laser réfléchie par la scène (2), en ce que l'étape de détection est sensiblement simultanée pour les deux signaux (S1, S3), et en ce que la soustraction est pondérée de manière à donner un résultat sensiblement nul en l'absence d'émission laser.

2. Imageur actif comportant :
- un émetteur (1) laser de domaine spectral d'émission étroit, éclairant une scène (2) ;
- un dispositif (4) de focalisation, collectant le flux lumineux (Fr, Fp) issu de la scène (2) ;
- des moyens (5) optiques de séparation, en deux signaux lumineux (S1, S2), du flux lumineux collecté par le dispositif (4) de focalisation ;
- des moyens (7, 8) de détection des deux signaux lumineux (S1, S3) produisant deux images (IM1, IM3) de la scène (2) ;
- des moyens (9) électroniques de soustraction des images l'une de l'autre ;
caractérisé en ce que :
- la séparation, en deux signaux lumineux (S1, S2), du flux lumineux collecté par le dispositif (4) de focalisation est une séparation simultanée ;
- les moyens (7, 8) de détection comprennent deux détecteurs photoélectriques produisant chacun une image (IM1, IM3) de la scène (2) ;
- le dispositif (4) de focalisation, les détecteurs (7, 8) photoélectriques et les moyens (5) optiques de séparation sont disposés de manière à ce que chaque signal lumineux (S1, S3) soit focalisé sur un détecteur (7, 8) photoélectrique différent ;
- les moyens (9) électroniques de soustraction des images l'une de l'autre, réalisent une opération de soustraction pondérée par des coefficients (α, β) déterminés de manière à ce qu'en l'absence d'émission laser, le résultat de l'opération de soustraction soit sensiblement nul ;
et en ce que l'imageur actif comporte aussi :
- des moyens (6) optiques de réjection de longueur d'onde dans un domaine spectral de réjection étroit incluant le domaine spectral d'émission, disposés de manière à n'affecter qu'un seul (S2) des deux signaux lumineux.

3. Imageur actif selon la revendication 2, caractérisé en ce que les moyens (6) optiques de réjection sont constitués par un filtre réjecteur de bande situé entre les moyens (5) optiques de séparation et l'un des détecteurs photoélectriques (7, 8).

4. Imageur actif selon la revendication 3, caractérisé en ce que les moyens (5) optiques de séparation sont constitués par une lame séparatrice répartissant l'intensité relative des signaux lumineux (S1, S2) de manière à compenser l'atténuation du filtre (6) réjecteur pour que chaque détecteur photoélectrique (7, 8) reçoive une intensité lumineuse sensiblement égale.

5. Imageur actif selon la revendication 2, caractérisé en ce que les moyens (5) optiques de séparation et les moyens (6) optiques de réjection sont constitués par un seul et même filtre holographique.

6. Imageur actif selon l'une quelconque des revendications 2 à 5, caractérisé en ce que les détecteurs photoélectriques (7, 8) sont des détecteurs matriciels.

7. Imageur actif selon l'une quelconque des revendications 2 à 6, caractérisé en ce que l'émetteur (1) laser est un émetteur laser à émission continue.

8. Imageur actif selon l'une quelconque des revendications 2 à 7, caractérisé en ce que le domaine spectral d'émission laser est situé dans le visible ou dans le proche infrarouge.

9. Système de détection d'optique pointée, caractérisé en ce que le système comporte un imageur actif selon l'une quelconque des revendications 2 à 8.
